(19) **Europäisches Patentamt**
**European Patent Office**
**Office européen des brevets**

(11) **EP 4 247 722 B1**

(12) **EUROPÄISCHE PATENTSCHRIFT**

(45) Veröffentlichungstag und Bekanntmachung des Hinweises auf die Patenterteilung:
**20.05.2026 Patentblatt 2026/21**

(21) Anmeldenummer: **21819353.0**

(22) Anmeldetag: **15.11.2021**

(51) Internationale Patentklassifikation (IPC):
**B65D 23/02** (2006.01)    **B65D 23/08** (2006.01)

(52) Gemeinsame Patentklassifikation (CPC):
**B65D 23/02; B65D 23/0814;** Y02W 30/80

(86) Internationale Anmeldenummer:
**PCT/EP2021/081671**

(87) Internationale Veröffentlichungsnummer:
**WO 2022/106350 (27.05.2022 Gazette 2022/21)**

(54) **VERFAHREN ZUM WASCHEN VON MEHRWEG-KUNSTSTOFFBEHÄLTER, VERFAHREN ZUM BESCHICHTEN VON SOLCHEN BEHÄLTERN UND BEHÄLTERBEHANDLUNGSMASCHINE FÜR DIE GETRÄNKEINDUSTRIE**

PROCESS FOR WASHING REUSABLE PLASTIC CONTAINER, PROCESS FOR COATING CONTAINERS OF THIS TYPE, AND CONTAINER TREATMENT MACHINE FOR THE BEVERAGE INDUSTRY

PROCÉDÉ DE LAVAGE DE RÉCIPIENTS EN PLASTIQUE RÉUTILISABLE, PROCÉDÉ DE REVÊTEMENT DE RÉCIPIENTS DE CE TYPE, ET MACHINE DE TRAITEMENT DE RÉCIPIENTS POUR L'INDUSTRIE DES BOISSONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.11.2020 DE 102020130917**

(43) Veröffentlichungstag der Anmeldung:
**27.09.2023 Patentblatt 2023/39**

(73) Patentinhaber:
• **KHS GmbH**
**44143 Dortmund (DE)**
• **Vereinigung zur Förderung des Instituts für Kunststoffverarbeitung in Industrie und Handwerk**
**An der Rhein.- Westf. Technischen Hochschule**
**52074 Aachen (DE)**

(72) Erfinder:
• **KYTZIA, Sebastian**
**23826 Todesfelde (DE)**
• **KEMPA, Bernd-Thomas**
**22145 Hamburg (DE)**
• **LANGHAMMER, Philipp**
**22397 Hamburg (DE)**

• **BEYERSDORFF, Björn**
**22880 Wedel (DE)**
• **HERBORT, Michael**
**20535 Hamburg (DE)**
• **VOGELSANG, Andreas**
**22145 Hamburg (DE)**
• **SOLTAU, Knut**
**59174 Kamen (DE)**
• **HAUF-HARTUNG, Katharina**
**22145 Hamburg (DE)**
• **DITTRICH, Falk**
**44581 Castrop-Rauxel (DE)**
• **KONRAD, Joachim**
**40627 Düsseldorf (DE)**
• **JARITZ, Montgomery**
**52062 Aachen (DE)**
• **DAHLMANN, Rainer**
**52146 Würselen (DE)**

(74) Vertreter: **Eisenführ Speiser**
**Patentanwälte Rechtsanwälte PartGmbB**
**Johannes-Brahms-Platz 1**
**20355 Hamburg (DE)**

(56) Entgegenhaltungen:
**DE-A1- 102011 104 730    US-A1- 2020 171 244**

## Beschreibung

Die Erfindung betrifft Verfahren zum Waschen von Mehrweg-Kunststoffbehältern mit einem Grundkörper und einer darauf abgeschiedenen Schutzschicht, Verfahren zum Beschichten solcher Behälter und eine Behälterbehandlungsmaschine für die Getränkeindustrie.

Aus der DE 31 44 457 A1 sind Glasflaschen für den Mehrfachgebrauch bekannt, die auf ihrer Außenfläche mit einer schnellhärtenden dünnen Schicht aus Siloxan oder Polysiloxan überzogen sind. Diese Schicht schützt die Außenfläche gegen Verkratzen.

Aus der WO 2017/102280 A2 ist es bekannt, für die Beschichtung Prozessgasmischungen aus $O_2$, Ar, HMDSO (Hexamethyldisiloxan) und HMDSN (Hexamethyldisilazan) zu verwenden. Das bereitgestellte Prozessgas wird mittels Massenflussreglern aus der Gasphase dosiert und aufgrund des Unterdrucks des Vakuumsystems durch die Beschichtungsstationen gesaugt. In den Beschichtungsstationen wird das Prozessgas umgesetzt, um eine Barriereschicht in den Flaschen zu erzeugen. Die Druckverhältnisse im System werden von mehreren Parametern bestimmt: Gasfluss, Saugvermögen der Vakuumpumpen und Leitwerte der Rohrleitungen (abhängig von Rohrlänge und Querschnitt). Für jeden zu beschichtenden Flaschentyp wird ein spezielles Rezept erstellt, in dem unter anderem die Prozessgasmischung aus $O_2$, Ar, HMDSO und HMDSN definiert ist. Diese Mischung wird während des Betriebs der Maschine (mit dem gewählten Rezept) nicht verändert. Da sich auch die maßgeblichen Rohrleitungen nicht wesentlich verändern, ergeben sich sehr stabile Druckverhältnisse während des Beschichtungsbetriebs bzw. in den Bereitschaftsphasen, wenn gerade keine Flaschen in der Vorrichtung beschichtet werden. Die DE 10 2011 104 730 A1 offenbart ebenfalls ein Verfahren zum Beschichten von PET-Flaschen unter Verwendung der Prozessgase HMDSO und HMDSN sowie beschichtete PET-Flaschen.

Es ist bekannt, PET-Mehrwegflaschen mittels Natronlauge vor der Wiederbefüllung zu reinigen. Dabei werden zwei Merkmale der PET-Mehrwegbehälter durch den industrieüblichen Reinigungsprozess in Behälterreinigungsmaschinen mit hochkonzentrierter Natronlauge bei hoher Temperatur stark negativ beeinflusst, so dass es zu einem vorzeitigen Verschleiß und somit zu einem vorzeitigen Aussondern der PET-Mehrwegflaschen aus dem Mehrwegkreislauf kommt. Bei den genannten Merkmalen handelt es sich um die Rauheit der Oberflächen und um das Innenvolumen der Behälter, welches durch ein Schrumpfen der Behälter in unerwünschter Weise reduziert wird. Der bekannte und übliche Waschprozess führt zu einer Aufrauhung der Oberflächen der PET-Mehrwegflaschen durch die Lauge, die sogenannte PET-Korrosion. Die mit jedem Umlauf zunehmende Aufrauhung der Oberfläche erschwert ein Abwaschen beziehungsweise Herauswaschen von Biofilmen und Fremdstoffen zunehmend, da sich diese unerwünschten Anhaftungen in immer tieferen Vertiefungen anlagern. Um diese Filme und Fremdstoffe dennoch zuverlässig entfernen zu können, sind aggressive Waschprozesse mit höheren Temperaturen erforderlich. Dabei ist es wesentlich, dass hohe Temperaturen bei entsprechend langer Einwirkzeit beziehungsweise Expositionsdauer dazu führen, dass PET-Mehrwegflaschen schrumpfen, was überaus unerwünscht ist. Um das Schrumpfen der PET-Mehrwegflaschen in einem erträglichen Rahmen zu halten, wird diesen durch eine größere Wanddicke eine höhere Formstabilität verliehen, was aber durch den dafür notwendigen höheren Materialeinsatz und damit verbundenen höheren Kosten überaus unerwünscht ist.

Eine Schädigung der PET-Oberfläche erfolgt vor allem durch die lange Verweilzeit der PET-Mehrwegflaschen in der Natronlauge der Reinigungsmaschine - die Verweildauer beträgt von 6-8 min in Deutschland, da Flaschen dort nicht so stark verschmutzen, bis zu 10-12 min in Südamerika. Die minimale Verweilzeit in der Reinigungsmaschine wird auch durch die zum Ablösen des Etiketts benötigte Zeit von 3-4 min bestimmt.

Aus dem Stand der Technik ist es bekannt, 2%-ige Natronlauge mit einem pH-Wert 13,7 und einer Temperatur von 55-60°C zu verwenden, da dies wirtschaftlich sinnvoll ist. Die Operationskosten sind dabei deutlich geringer als bei Alternativen wie zum Beispiel Komplexbildner Ethylendiamintetraacetat (EDTA) oder Nitrilotriessigsäure (NTA).

Lassen sich zum Beispiel ein Biofilm oder Fremdstoffe nicht mehr komplett entfernen, so wird die PET-Mehrwegflasche aussortiert. Weiterhin führt der Einsatz einer hochkonzentrierten Natronlauge zu einem "blind werden" der PET-Mehrwegflaschen. Dies wird optisch detektiert und entsprechende PET-Mehrwegflaschen werden aussortiert.

Darüber hinaus ist es in der Logistik/Mehrwegkreislauf vor der Wiederbefüllung notwendig, zu erfassen, mit welchem Getränketyp die PET-Mehrwegflasche im vorhergehenden Umlauf beziehungsweise in einem der vorhergehenden Umläufe befüllt war. Dabei ist zwischen PET-Mehrwegflaschen, die mit aromatisierten Getränken befüllt waren und anderen PET-Mehrwegflaschen, welche beispielweise mit Mineralwasser befüllt waren, zu unterscheiden. Dies ist erforderlich, da bestimmte Aromen, wie zum Beispiel Limonen zunächst aus dem Getränk in die Kunststoffwandung übergehen und sich dort einlagern. Wird eine solcher PET-Mehrwegflasche anschließend mit einem Wasser befüllt, so gehen die Aromastoffe aus der Kunststoffwandung in das Getränk über, was den Eigengeschmack des Wassers negativ beeinflusst beziehungsweise verändert, was in der Praxis überaus unerwünscht ist. Eine variable beziehungsweise wechselweise Nutzung der PET-Mehrwegflaschen für aromatisierte und nicht aromatisierte Getränke ist nach dem Stand der Technik nicht möglich.

Aus dem Stand der Technik sind Reinigungsmaschinen, Beschichtungsmaschinen und Verfahren zum Reinigen beziehungsweise Beschichten von Mehrwegbehältern aus Kunststoff gut bekannt, wie beispielsweise aus der DE 10 2016 105 548 A1, der DE 10 2018 114 776 A1 und der DE 10 2018 129 694 A1.

Aufgabe der Erfindung ist es, einen Behälter, Verfahren zur Reinigung, Verfahren zur Beschichtung sowie eine Behälterbehandlungsmaschine für die Getränkeindustrie zur Verfügung zu stellen, die die vorbeschriebenen Nachteile vermeiden.

Die Erfindung löst die Aufgabe durch ein Verfahren zum Waschen Mehrweg-Kunststoffbehältern mit den Merkmalen des Anspruchs 1. Darüber hinaus wird die Aufgabe durch ein Verfahren zum Beschichten solcher Behälter mit den Merkmalen des Anspruchs 2 sowie durch eine Behälterbehandlungsmaschine für die Getränkeindustrie mit den Merkmalen des Anspruchs 11 gelöst. Vorteilhafte Weiterbildungen der Erfindung sind in den abhängigen Ansprüchen angegeben.

Dadurch, dass die Schutzschicht den Mehrweg-Kunststoffbehälter, insbesondere eine PET-Flasche, teilweise bedeckt, ist er an diesen Stellen vor einem Angriff der Natronlauge beim Reinigungsprozess geschützt, so dass diese die Oberfläche des Grundkörpers nicht angreifen und damit bereits vorhandene Unebenheiten nicht verstärken kann, so dass keine größeren Anhaftungen von Biofilmen und Fremdstoffen möglich sind. Da die gesamte Schutzschicht oder zumindest ihre oberste Schicht bei der Reinigung entfernt werden - die Schutzschicht besteht aus einem Material, das in einem Laugenbad löslich ist-, können eventuell an der Oberfläche der Schutzschicht anhaftenden Biofilme oder ähnliches problemlos entfernt werden. Somit kann nach jedem Waschgang der Behälter mit unterschiedlichen Flüssigkeiten befüllt werden, unter anderem auch mit einem Wasser, nachdem im vorangegangenen Zyklus eine Limonade im Behälter war. Dies gilt nur, wenn die Schutzschicht gegen Aromaten migrationsfest ist.

Die Erfindung sieht vor, dass die Schutzschicht aus HMDSO, HMDSN oder HMDS (Hexamethyldisilan) oder einer Mischung aus mindestens zwei dieser Stoffe gebildet ist. Dadurch erhält man eine sehr zuverlässige Schutzschicht.

Eine vorteilhafte Weiterbildung der Erfindung sieht vor, dass die Schutzschicht eine Dicke von 10-200 nm, bevorzugt 80 nm, aufweist. Dadurch ist es möglich, die Dehnungseigenschaften zu verbessern.

Eine weitere vorteilhafte Weiterbildung der Erfindung sieht vor, dass die Schutzschicht den gesamten Innenraum des Grundkörpers bedeckt, bevorzugt zusätzlich auch zumindest einen Teil der Außenfläche des Grundkörpers. Damit ist in optimaler Art und Weise sichergestellt, dass keinerlei unerwünschte Fremdstoffe von der vorherigen Füllung nach Reinigung des Behälters zurückbleiben und somit die neue Füllung unabhängig von der vorherigen Füllung gewählt werden kann.

Eine weitere vorteilhafte Weiterbildung der Erfindung sieht vor, dass zwischen dem Grundkörper und der Schutzschicht eine Haftvermittlerschicht und eine Barriereschicht angeordnet sind. Dadurch kann eine Gewichtsreduktion des Behälters erreicht werden, ohne dass durch die Einsparung an PET-Material die Barrierefunktion negativ beeinflusst wird; sie kann dadurch sogar noch um ein Vielfaches gesteigert werden.

Eine weitere vorteilhafte Weiterbildung der Erfindung sieht vor, dass die Haftvermittlerschicht aus einem Gemisch von HMDSO und $O_2$ oder von HMDSO und Ar besteht, die eine Dicke von 5- 40nm, bevorzugt 5-20 nm, aufweist, und die Barriereschicht aus einem Gemisch von HMDSN und $O_2$ oder von HMDSN und $O_2$ und Ar besteht, die eine Dicke von 5-20 nm, bevorzugt 10 nm, aufweist. Dadurch werden die Dehnungseigenschaften verbessert und es gibt einen zusätzlichen Schutz des Füllgutes vor Migration aus dem PET-Material.

Eine weitere vorteilhafte Weiterbildung der Erfindung sieht vor, dass das für den Grundkörper verwendete PET-Material einen Anteil recyceltem PET-Materials enthält, insbesondere einen Anteil größer 50%, besonders bevorzugt einen Anteil zwischen 80-100%, insbesondere 100%. Da durch die erfindungsgemäße Schutzschicht die Oberflächenrauigkeit des Grundkörpers keine Rolle bezüglich des Anhaftens von Biofilmen oder Fremdstoffen spielt, ist die Verwendung von recyceltem PET-Material möglich, was die Umweltverträglichkeit erhöht.

Durch das erfindungsgemäße Waschen der Behälter in einem Laugenbad einer Behälterwaschmaschine können kein Biofilm und keine Fremdstoffe mehr am Behälterinnenraum haften, die eine Befüllung mit unterschiedlichen Flüssigkeiten - beispielsweise ein Wasser nach vorheriger Füllung mit einer Limonade - verhindern würden.

Eine vorteilhafte Weiterbildung der Erfindung sieht vor, dass die Laugenkonzentration des Laugenbades größer oder gleich 0,5% ist, bevorzugt zwischen 1,0-2,5% liegt und besonders bevorzugt 1,5% beträgt, und/oder die Verweildauer im Laugenbad unter 15 min beträgt, bevorzugt zwischen 4-10 min und/oder die Laugentemperatur unter 85°C beträgt, bevorzugt zwischen 40-70°C, besonders bevorzugt zwischen 50-60°C. Dadurch wird bei ausreichender Reinigungsfunktion eine schonendere Behandlung der Behälter erzielt, als dies im Stand der Technik der Fall war.

Es wird vorgeschlagen, dass beim erfindungsgemäßen Waschen (gemäß Anspruch 1) der Behälter in einem Laugenbad einer Behälterwaschmaschine die Schutzschicht erst nach mehreren Durchläufen vollständig abgewaschen ist, beispielsweise nach mindestens 15 oder sogar erst nach mindestens 20 Waschvorgängen. Dadurch können auch kein Biofilm und keine Fremdstoffe mehr am Behälterinnenraum haften, die eine Befüllung mit unterschiedlichen Flüssigkeiten verhindern würden, da die oberste Schicht, an der eine solche Anhaftung vorgelegen haben könnte, abgewaschen wurde. Je höher die Anzahl an Waschzyklen ist, bis ein vollständiges Abwaschen erfolgt ist, desto weniger Aufwand muss betrieben werden, um eine Wiederbefüllung durchzuführen, da keine neue Beschichtung erfolgen muss - dies ist erst nach dem vollständigen Abwaschen der Schutzschicht zwingend nötig.

Dadurch, dass beim erfindungsgemäßen Beschichten der Behälter gemäß Anspruch 2 das Abscheiden der Schutzschicht auf der Innenfläche des Grundkörpers des Behälters mittels eines PECVD-Verfahrens zur mikrowelleninduzierten Plasmareaktion erfolgt, wobei als Prozessgas HMDSO, HMDSN oder HMDS oder einer Mischung aus mindestens zwei dieser Gase und als Trägergas Argon, Helium, Sauerstoff oder Stickstoff verwendet wird, wird eine hervorragende Schutzschicht erzielt. Dieses Ergebnis ergibt sich, da die Mikrowellenpulsleistung P_Puls in Abhängigkeit vom Duty-Cycle t_on / (t_on + t_off) gesteuert wird und die Beziehung für die mittlere Mikrowellenleistung P_mittel lautet: P_mittel = P_Puls x t_on / (t_on + t_off), wobei t_on die Impulsdauer und t_off die Pausenzeit sind. Dadurch werden Steuerung, Morphologie und Schichteigenschaften verbessert.

Eine vorteilhafte Weiterbildung der Erfindung sieht vor, dass P_mittel bei 10-250 W liegt, bevorzugt zwischen 10-100 W, wodurch die pH-Beständigkeit optimiert wird, P_Puls zwischen 200-2.000 W liegt, t_on zwischen 0,01-10 ms liegt, t_off zwischen 1-100 ms liegt, bevorzugte zwischen 1-50 ms. Dadurch wird mit weniger Energieaufwand ein hervorragender Schutz des Grundkörpers durch eine Schutzschicht erreicht, die ausreichend Schutz bietet. Die optimalen Werte für P_Puls und t_on hängen von der Flaschengeometrie ab.

Eine weitere vorteilhafte Weiterbildung der Erfindung sieht vor, dass der Anteil des Prozessgases an der Prozessgaszusammensetzung zwischen 20-100% beträgt, bevorzugt zwischen 20-50%, besonders bevorzugt zwischen 20-25%, und/oder der Gesamtfluss 50-1.500 sccm beträgt, bevorzugt zwischen 50-500 sccm, besonders bevorzugt 50-250 sccm.

Eine Möglichkeit ist, dass das Abscheiden einer weiteren Schutzschicht nach jedem Waschen des Behälters erfolgt. Dadurch wird bei jedem Wiederbefüllen der Behälter gewährleistet, dass keine Reste dieser Füllung bei dem danach anschließenden Zyklus zu einer Störung führen.

Die Erfindung sieht aber vor, dass das Abscheiden einer weiteren Schutzschicht nicht vor Durchlaufen von mindestens zehn Waschvorgängen, bevorzugt mindestens 15 Waschvorgängen, besonderes bevorzugt mindestens 20 Waschvorgängen, erfolgt. Wenn die Schutzschicht dick genug ist und das Laugenbad nur eine dünne Schicht der Schutzschicht abwäscht, wird der Mehraufwand der häufigen Beschichtung nach jedem Zyklus vermieden, da die noch verbleibende Restschicht der Schutzschicht trotzdem ein Wiederbefüllen ohne Rückstände der vorherigen Füllung sicherstellt.

Eine weitere vorteilhafte Weiterbildung der Erfindung sieht vor, dass vor dem Abscheiden der Schutzschicht eine Haftvermittlerschicht und eine Barriereschicht auf den Behälter abgeschieden werden. Dadurch wird der Schutz des Füllgutes gegenüber einer Migration aus dem PET-Material erhöht und es ergeben sich zusätzliche Barriereeigenschaften.

Dadurch, dass bei der erfindungsgemäßen Behälterbehandlungsmaschine für die Getränkeindustrie gemäß Anspruch 11, insbesondere für eine Beschichtungsmaschine, ein Mikroprozessor, ein programmierbarer Computer oder eine elektronische Schaltung vorhanden ist, können bei der Herstellung eines Mehrweg-Kunststoffbehälter die vorgenannten erfindungsgemäßen Verfahren und ihre vorteilhaften Weiterbildungen durchgeführt werden. Es ergeben sich die oben zu den Verfahren jeweils ausgeführten Vorteile.

Es versteht sich, dass die oben und nachfolgend erläuterten Merkmale und Ausführungsformen nicht nur in den jeweils angegebenen Kombinationen offenbart sind, sondern auch in Alleinstellung sowie in anderen Kombinationen zur Offenbarung gehörend anzusehen sind.

Nachfolgend wird die Erfindung anhand bevorzugter Ausführungsformen näher erläutert.

Ein erstes Ausführungsbeispiel eines Mehrweg-Kunststoffbehälters ist folgendermaßen aufgebaut:
Es handelt sich um eine PET-Flasche, deren Grundkörper 80% recyceltes PET-Material (rPET) und 20% nicht-recyceltes PET-Material enthält. Auf der Innenfläche des Grundkörpers ist eine 150 nm dicke Schutzschicht aus HMDSO, HMDSN, HMDS oder einer Mischung aus mindestens zwei dieser Gase abgeschieden.

Ein zweites Ausführungsbeispiel eines Mehrweg-Kunststoffbehälters ist folgendermaßen aufgebaut:
Es handelt sich um eine PET-Flasche, deren Grundkörper aus 100% recyceltem PET-Material (rPET) besteht. Auf der Innenfläche des Grundkörpers ist eine 5-40 nm dicke Haftvermittlerschicht aus Hexamethyldisiloxan (HMDSO) abgeschieden, darauf ist eine 5-20 nm dicke Barriereschicht aus Hexamethyldisilizan (HMDSN) abgeschieden und darauf ist eine 150 nm dicke Schutzschicht aus HMDSO, HMDSN, HMDS oder einer Mischung aus mindestens zwei dieser Gase abgeschieden.

Ein drittes Ausführungsbeispiel eines Mehrweg-Kunststoffbehälters ist folgendermaßen aufgebaut:
Es handelt sich um eine PET-Flasche, die im Wesentlichen gleich aufgebaut ist, wie das erste Ausführungsbeispiel, bei dem aber zusätzlich auf der Außenfläche des Grundkörpers eine 10-200 nm dicke Schutzschicht aus HMDSO, HMDSN, HMDS oder einer Mischung aus mindestens zwei dieser Gase abgeschieden ist.

Das Abscheiden der einzelnen Schichten zur Herstellung der vorgenannten drei Ausführungsbeispiele erfolgt in einem Ausführungsbeispiel einer Beschichtungsmaschine, die unter die Erfindung fällt, die eine aus dem Stand der Technik bekannte Plasmabehandlung nach dem Prinzip der plasmaunterstützten chemischen Gasphasenabscheidung (PECVD) durchführt, wie sie beispielsweise in der DE 10 2016 105 548 A1, der DE 10 2018 114 776 A1 oder der DE 10 2018 129 694 A1 beschrieben sind. Eine solche Beschichtungsmaschine weist einen Mikroprozessor auf, der die Durchführung der Beschichtung steuert.

Das Verfahren zur Abscheidung der Schichten ist prinzipiell aus dem Stand der Technik bekannt. Insbesondere für das Abscheiden der Haftvermittlerschicht und der Barriereschicht ist dies aus der DE 10 2018 114 776 A1 bekannt, so dass darauf Bezug genommen wird.

Nachdem durch dieses Verfahren der Grundkörper mit der Haftvermittlerschicht und der Barriereschicht versehen ist, wird die Schutzschicht wie folgt abgeschieden - wobei dies auch für das erste und dritte oben genannte Ausführungsbeispiel des Mehrweg-Kunststoffbehälters gilt, bei denen die Schutzschicht direkt auf die Innenfläche beziehungsweise die Außenfläche des Grundkörpers abgeschieden wird.

Hierfür wird die Plasmakammer, wie sie beispielsweise in der WO 95/22413 A1 oder der WO 99/17334 A1 beschrieben ist, der Beschichtungsmaschine evakuiert - gegebenenfalls wird dabei das Prozessgas-/Trägergasgemisch entfernt, aus dem die Barriereschicht abgeschieden wurde, und unter Umständen noch ein Spülschritt eingefügt - und dann das für die Abscheidung der Schutzschicht benötigte Prozessgas-/Trägergasgemisch in die Plasmakammer eingebracht. Es handelt sich hierbei um Silikonöle als Prozessgas (wobei das Prozessgas im Stand der Technik auch als Monomer bezeichnet wird) und Argon als Trägergas in einem Verhältnis von 50:50 (bezogen auf die Massen).

Mittels eines Mikrowellengenerators wird Energie in das Gasgemisch eingebracht bis die Zündung des Plasmas und somit der Abscheideprozess erfolgt. Dann wird eine 10-200 nm dicke Schutzschicht abgeschieden - entweder direkt auf die Innenfläche des PET-Materials des Grundkörpers (erstes und drittes Ausführungsbeispiel des Mehrweg-Kunststoffbehälters) oder auf die Barriereschicht der Innenfläche des Grundkörpers, die auf die vorab schon abgeschiedene Haftvermittlerschicht abgeschieden wurde (zweites Ausführungsbeispiel des Mehrweg-Kunststoffbehälters).

Im Falle des zweiten Ausführungsbeispiels des Mehrweg-Kunststoffbehälters wird gleichzeitig auf die Außenfläche des Grundkörpers eine Schutzschicht aus demselben Material wie auf der Innenfläche abgeschieden. Dazu wird nicht nur der Innenraum der PET-Flasche mit dem Gasgemisch gefüllt, sondern auch der Bereich der Plasmakammer, der sich außerhalb des Grundkörpers der PET-Flasche befindet. Soll die Dicke der Schutzschicht auf der Innenfläche und der Außenfläche nicht gleich dick sein, muss dafür gesorgt werden, dass nach Erreichen der geringeren Dicke der Schutzschicht das Gasgemisch aus dem Bereich - Innenraum des Grundkörpers oder Außenraum -, in dem die Schutzschicht nicht mehr dicker werden soll, entfernt und gleichzeitig in dem anderen Bereich erhalten bleibt. Dies wird durch Trennen des Außen- und des Innenraums der Flaschen mittels einer Mündungsdichtung erreicht. Im Anschluss wird dann aus dem Gasgemisch in dem verbliebenen Bereich durch Zünden des Plasmas die Dicke der Schutzschicht noch weiter erhöht, bis der gewünschte Wert erreicht wird. Dies geschieht, wie alle Abscheidungsprozesse, in der durch den Stand der Technik bekannten Art und Weise.

Der Abscheideprozesses wird bei einer mittleren Mikrowellenleitung P_mittel von 150 W durchgeführt. Hierzu wird eine Mikrowellenpulsleistung P_Puls von 1.500 W mit einer Impulsdauer t_on von 5 ms bei einer Pausenzeit t_off von 45 ms angelegt. Durch die Variation der Mikrowellenparameter lässt sich eine homogene Abscheidung der Schutzschicht auf der PET-Flasche erzielen.

Nach der Beendigung des Abscheidevorgangs wird der Prozess wie aus dem Stand der Technik bekannt weitergeführt, bis die PET-Flasche aus der Beschichtungsmaschine herausgefördert wurde.

Die drei Ausführungsbeispiele (wobei das erste und das dritte Ausführungsbeispiel auch als 1-Layer-Lösung und das zweite Ausführungsbeispiel auch als 3-Layer-Lösung bezeichnet werden) eines Mehrweg-Kunststoffbehälters haben den Vorteil, dass ihre Grundkörper beim Spülen, das zwingend bei einem Mehrweg-Kunststoffbehälter vor dem nächsten Befüllen erfolgen muss, nicht von der Reinigungsflüssigkeit angegriffen werden, was zu einer Erhöhung der Rauigkeit des Grundkörpers führen würde und im Innenraum zu einer Anlagerung von Biofilmen der im vorangegangen Umlauf im Behälter befindlichen Flüssigkeit führen würde, der unter Umständen nach der Neubefüllung in die neue Flüssigkeit abgegeben würde und zu einer Geschmacksveränderung führen würde. Weitere Vorteile sind oben bereits in der allgemeinen Erfindungsbeschreibung aufgeführt und finden sich auch noch weiter unten. Dabei können die in den Ausführungsbeispielen konkret angegebenen Anteile an recyceltem PET-Material (rPET) auch abweichend gewählt werden, z.B. mit einem rPET-Wert größer 50%, bevorzugt zwischen 80 % und 100 %

Es folgt die Beschreibung von zwei Ausführungsbeispielen von Waschverfahren.

Das erste Waschverfahrens-Ausführungsbeispiel wird in erster Linie in Zusammenhang mit einer PET-Flasche gemäß dem ersten und dritten Behälter-Ausführungsbeispiel (den beiden 1-Layer-Lösungen) durchgeführt. Dabei handelt es sich um eine Schutzschicht, die bei jedem Waschvorgang vollständig abgewaschen wird (für die auf der Außenfläche des Grundkörpers abgeschiedene Schutzschicht gilt dies nicht zwingend). So dass eine Neubeschichtung der Innenfläche nach jedem Waschvorgang durchgeführt werden muss.

Das Waschverfahren erfolgt in einem Ausführungsbeispiel einer Reinigungsanlage, die im Wesentlichen aus dem Stand der Technik bekannt ist und darüber hinaus einen Mikroprozessor aufweist, der die Durchführung der Reinigung steuert.

Für die Reinigung wird eine 1,5%-ige Natronlauge mit einem pH-Wert 13,6 und einer Temperatur von 55°C verwendet. Die PET-Flasche verweilt 6 min im Laugenbad, um die Schutzschicht vollständig abzuwaschen.

Somit kann die Behandlungszeit gegenüber dem Stand der Technik verringert werden. Außerdem kann eine teilweise Kompensation des Einsatzes von Natronlauge erfolgen, welche gegenüber PET eine hohe Aggressivität besitzt.

Das zweite Waschverfahrens-Ausführungsbeispiel, das erfindungsgemäß ist, wird in Zusammenhang mit einer PET-Flasche gemäß der 3-Layer-Lösung angewandt. Dabei wird die Schutzschicht bei einem einzigen Waschvorgang nicht vollständig abgewaschen, sondern sie ist erst nach ungefähr 20 Waschvorgängen vollständig abgewaschen, so dass erst dann eine Neubeschichtung der Innenfläche durchgeführt werden muss.

Hierfür sind die Parameter des Reinigungsvorgangs wie folgt: Für die Reinigung wird eine 2,0%-ige Natronlauge mit einem pH-Wert 13,7 und einer Temperatur von 60°C verwendet. Die PET-Flasche verweilt 10 min im Laugenbad, wobei ein Teil der Schutzschicht abgewaschen wird.

Nach diesen spezifischen Ausführungen zu den Ausführungsbeispielen folgen allgemeinere Ausführungen, die sich teilweise auch direkt auf die oben dargestellten Ausführungsbeispiele beziehen.

Die Erfindung betrifft allgemein Verfahren zum Waschen oder zum Beschichten von Mehrwegbehältern aus mindestens einem Kunststoffmaterial, bevorzugt aus PET. Dabei können die Kunststoff-Mehrweg-Behälter verschiedene Gestalten aufweisen. Beispielsweise können sie als Mehrwegflaschen ausgebildet sein. Alternativ können diese Behälter beispielsweise auch in Form einer Getränkedose oder eines Marmeladenglases ausgebildet sein. Bevorzugt, aber nicht zwingend, weisen diese Behälter einen Schraubverschluss auf.

Die Erfindung betrifft insbesondere Behälterbehandlungsmaschinen in der Getränkeindustrie. Beispielsweise zählen dazu Behälterbehandlungsmaschinen mit Leistungen von mehr als 10.000 Behältern pro Stunde, insbesondere solche, mit einer Leistung von mehr als 50.000 Behältern pro Stunde. Beispiele für derartige Behälterbehandlungsmaschinen sind Reinigungsmaschinen, Pasteurisierungsmaschinen, Anlagen zur CIP-Reinigung, Kurzzeiterhitzungsanlagen und Ultrakurzzeiterhitzungsanlagen.

Die Erfindung liegt im Bereich von Mehrweg-Kunststoffbehältern, beispielsweise Mehrweg-PET-Flaschen, sowie der PECVD-Beschichtung von derartigen Behältern. Es wird eine Schutzschicht durch einen PECVD-Plasmaprozess, bevorzugt im inneren Bereich der PET-Flasche - zumindest in dem Bereich, der nach dem Befüllen von dem Getränk eingenommen wird - hergestellt. Es ist darüber hinaus möglich, zusätzlich eine Beschichtung auf die Außenflächen der PET-Flaschen aufzubringen.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block- oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparates) wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Es ist vorgesehen, zumindest die Innenwandung der Kunststoff-Mehrwegbehälter mit einer abwaschbaren Beschichtung, die als Schutzschicht bezeichnet wird, zu versehen. Damit wird verhindert, dass sich Schmutzpartikel, Aromastoffe beziehungsweise unerwünschte Biofilm-Verschmutzungen direkt an, beziehungsweise in der Kunststoffwandung des Kunststoff-Mehrwegbehälters ansiedeln oder einlagern.

Die Offenbarung beschreibt eine Schutzschicht im inneren der PET-Flasche zum Schutz der PET-Wandung vor PET-Korrosion. Dabei ist bei einer Ausführungsform vorgesehen, dass die aufgebrachte Schutzschicht eine abwaschbare Schicht ist, die während des Waschens im Laugenbad vollständig ab- und/oder ausgewaschen wird und somit einen langandauernden, direkten Kontakt der PET-Wandung mit der Waschlauge verhindert.

Im Falle einer abwaschbaren Schicht ist eine Veränderung des Waschprozesses bei vollständig auswaschbarer Schutzschicht durch Reduktion des pH-Wertes in den Laugenbädern der Reinigungsmaschine auf 10 denkbar; bei noch niedrigeren pH-Werten werden Bakterien nicht mehr zuverlässig abgetötet.

Durch die niedrigere Konzentration der eingesetzten chemischen Komponenten und den somit reduzierten Laugenverbrauch wird eine Reduktion der Operationskosten gegenüber dem Stand der Technik möglich. Durch eine Einsparung an Behandlungszeit kann je nach Anwendungsfall auch eine Einsparung an Investitionskosten - durch Wegfall einer Laugenschleife - erfolgen.

Weitere Effekte durch eine abwaschbare Innenbeschichtung der Behälter sind:

- ein höherer Lifecycle, also mehr Umläufe der Mehrwegbehälter, bis diese nicht mehr verwendet werden können;

- eine geringere Ausschussrate, da keine unerwünschten Verbindungen aus dem PET ausgasen (weil diese Verbindungen vorher nicht in das PET migrieren konnten), insbesondere, wenn eine zusätzliche Barriereschicht vorhanden ist (wie bei der 3-Layer-Lösung);

- allgemein eine höhere Produktqualität.

Als Folge der Schutzschicht kann die Aggressivität des Reinigungsprozesses reduziert werden, was letztlich auch dazu führt, dass die Schrumpfneigung der Behälter deutlich reduziert wird, wodurch die Wandstärken der Behälter reduziert werden können, was zu erheblichen Materialeinsparungen führt.

Bei der 1-Layer-Lösung ist ein erneutes Beschichten nicht erfindungsgemäß vor jedem Abfüllvorgang notwendig.

Erfindungsgemäß ist vorgesehen, dass die Schutzschicht bei einem Waschvorgang nur zum Teil ausgewaschen wird - das heißt, dass die Dicke der Schutzschicht jeweils reduziert wird -, wobei aber die gesamte Innenfläche des Behälters noch vollständig beschichtet bleibt. Eine solche Schutzschicht übersteht also mehrere Waschvorgänge, bevor sie vollständig ausgewaschen wird.

In diesem Fall muss eine Widerstandfähigkeit der Schutzschicht gegenüber mehreren Waschvorgängen bestehen (1-Layer-Lösung für mehrere Waschzyklen, Laugenbeständigkeit). Dadurch ist in dieser Variante nur eine einmalige Beschichtung der Flasche im Neuzustand notwendig und nicht nach jedem Waschvorgang, somit auch nicht vor jedem Abfüllvorgang. Die Schutzschicht kann nach mehreren Waschzyklen aufgefrischt werden, indem die PET-Flasche mittels des beschriebenen PECVD-Verfahrens wieder beschichtet wird.

Für beide Beschichtungen gilt, dass sich beispielsweise die Biofilme und Fremdstoffe nur auf der Beschichtung und somit nicht auf der Innenwand der PET-Flasche selbst ansiedeln können und sich somit leichter im Waschprozess herauswaschen lassen.

Die Probleme, dass sich Bakterien, (Bio-)Filme oder Fremdstoffe in den tiefen Kratern der PET-Korrosion ansiedeln, ist aufgrund der erfindungsgemäßen Schutzschicht ausgeschlossen.

Somit ergeben sich unterschiedliche Vorteile und Lösungen, die PET-Mehrwegflasche ökologischer und wirtschaftlicher zu machen.

Die Schutzschicht ermöglicht ein einfacheres Herausspülen der Fremdstoffe, so dass der Waschprozess in seiner Konzentration aus Lauge, Additive und Temperatur optimiert werden kann. Dies bedeutet geringere Laugen-Konzentrationen, niedrigere Durchlaufzeiten und niedrigere Temperaturen im Waschprozess, so dass eine Reduzierung des PET-Materials für eine PET-Mehrwegflasche möglich wird. Die reduzierte Temperatur ergibt geringeren Schrumpf. Dadurch werden die Medienkosten gesenkt und die Umweltfreundlichkeit verbessert. Weiterhin bleiben durch die Schutzschicht die hydrophoben Eigenschaften (beispielsweise Kontaktwinkel) erhalten und im Vergleich zu mehrfach gewaschenem PET-Material wird die Anhaftung von Fremdstoffen reduziert. Letztendlich wird die Anzahl der ausgeschleusten PET-Flaschen reduziert. Das Erblinden der PET-Flaschen im inneren Bereich durch den Waschprozess wird deutlich verzögert.

Daher ist es in Fällen, bei denen die Behälter während ihrer Umläufe nicht anderweitig mechanisch beschädigt werden, möglich, eine Anzahl von 20 und mehr Umläufen beziehungsweise Waschzyklen zuverlässig zu erreichen.

Eine erfindungsgemäße Veränderung der Reinigungsmaschine führt zu mehreren Vorteilen, wie beispielsweise der Parameter, dass die Temperatur der Laugenbäder abgesenkt werden kann, auch wenn dies eher ein geringes Einsparpotential in sich birgt.

Signifikante Einsparpotentiale ergeben sich für die Behandlungszeit und die eingesetzte Reinigungschemie. Es kann eine teilweise Kompensation des Einsatzes von Natronlauge, welche gegenüber PET eine hohe Aggressivität besitzt, erreicht werden. Durch die geringere Rauheit der inneren Oberfläche der PET-Flaschen kann eine potentielle Verkürzung der Behandlungszeit erreicht werden, sofern die Etikettenablösezeit dem nicht entgegensteht. Dies führt zu einer geringeren Schrumpfung.

Die Schutzschicht kann auch mit einer Barriereschicht kombiniert werden. So zum Beispiel mit einem 2-Layersystem gemäß dem Plasmax-Standard Prozess der Anmelderin, bei dem auf die Innenwand der PET-Flasche zuerst ein Haftvermittler und darauf eine Barriereschicht abgeschieden werden. Die Schutzschicht wird einfach als dritte Schicht aufgebracht (dies ist die 3-Layer-Lösung), so dass die Barriereschicht durch die Schutzschicht hinsichtlich der Laugenbeständigkeit in der Waschmaschine geschützt ist. Mit dieser zusätzlich eingebrachten Barriere können weitere Nachteile der PET-Mehrwegflasche kompensiert werden. So wird einerseits die Migration von Fremdstoffen aus der PET-Wandung in das Getränk und anderseits die Migration von zum Beispiel Limonen in die PET-Wandung erheblich reduziert.

Trotz der Gewichtsreduktion der erfindungsgemäßen PET-Flasche kann bei der 3-Layer-Lösung nicht nur die durch die Einsparung an PET-Material verlorene, beziehungsweis erheblich reduzierte, Barrierefunktion ausgeglichen werden, sondern sie wird noch um ein Vielfaches gesteigert.

Damit ergibt sich ein Mehrwert in der Shelf-Life und der nicht mehr notwendigen Separation zwischen Wasser und aromatisierten Getränkeflaschen.

Die PET-Mehrwegflasche erreicht damit - wie dies bislang nur für Glas-Mehrwegflaschen möglich war - ebenfalls über 20 Waschzyklen.

Typische Barriereverbesserungen (BIF) liegen für $O_2$ > 10 und für $CO_2$ > 3, so dass logistische Vorteile bezüglich der Shelf-Life erreicht werden.

Die erfindungsgemäße Schutzschicht kann bei der Beschichtung der PET-Mehrwegflasche zusätzlich auch außen aufgebracht werden. Dadurch wird einerseits die Kratzfestigkeit aber andererseits auch die Laugenbeständigkeit verbessert, so dass das Erblinden der Flaschen von außen durch PET-Korrosion deutlich reduziert wird. Dadurch kann die PET-Flasche mehr Waschzyklen durchlaufen, weil sie länger optisch hochwertiger aussieht und somit wird ein vorzeitiges Ausscheiden vermieden. Mit dieser Vorgehensweise werden ebenfalls über 20 Waschzyklen für die PET-Mehrwegflaschen erreicht. Weiterhin kann bei einer abwaschbaren Schutzschicht außen, eine beschleunigte Ablösung des Etiketts stattfinden, was zu weiteren Einsparungen im Waschprozess führen kann.

Die Schutzschicht in Kombination mit einer Barrierebeschichtung ermöglicht auch den Einsatz von recyceltem PET-Material (rPET) bis zu einem Anteil von 100%. Migrationen von der PET-Wand und auf umgekehrter Weise sind erheblich reduziert. Aufgrund der Optimierung des Waschprozesses erfolgt ein geringerer Schrumpf, so dass das nicht so hochwertige recycelte Material eingesetzt werden kann.

Aufgrund des optimierten Waschprozesses können in der Medienversorgung bei der Reinigungsmaschine Einsparungen erzielt werden. So kann die Anzahl der Laugensegmente reduziert werden, da die Tauchzeit beziehungsweise die Behandlungszeit deutlich verringert ist. Damit ergibt sich das Potential, die Reinigungsmaschine kleiner auszulegen, wodurch Herstellungskosten eingespart werden und gleichzeitig der ökologische Fußabdruck der Reinigungsmaschine verkleinert wird. Wesentlicher Vorteil der Erfindung ist jedoch, dass die Verschleppung von Laugenresten in den nächsten Waschvorgang deutlich reduziert werden könnte. Hieraus ergibt sich ein mögliches Einsparpotential von über 10%.

Der entscheidende Punkt bei der 3-Layer-Lösung ist, dass bei einer der möglichen Ausführungsformen die Schutzschicht eine Laugenbeständigkeit für mehrere Waschzyklen besitzt. Bei einer Ausführungsvariante ist die Schutzschicht so gestaltbar, dass sie im Waschprozess gezielt ausgewaschen werden kann.

Mit dieser Schutzschicht (sowohl bei der 1- wie bei der 3-Layer-Lösung) vermeidet man die im industriellen Umfeld bestehende PET-Korrosion, die für eine Vielzahl von Problemen sorgt, insbesondere die Anhaftung von Biofilmen bei Süßgetränken.

Die Beschichtung von PET-Mehrwegflaschen erhöht die Langlebigkeit der Flasche und die Anzahl an möglichen Waschzyklen. Auch ist es möglich, die Flasche hinsichtlich des Gewichts zu optimieren. Darüber hinaus ist die Optimierung des Waschprozesses gegeben, so dass dieser ökologischer und wirtschaftlicher wird und somit zur Erhöhung der Anzahl an Zyklen beiträgt.

Die Erfindung wurde voranstehend an Ausführungsbeispielen beschrieben. Es versteht sich, dass im Rahmen des Erfindungsgedankens der die Erfindung definierenden Ansprüche zahlreiche Änderungen sowie Abwandlungen möglich sind.

**Patentansprüche**

1. Verfahren zum Waschen von Mehrweg-Kunststoffbehältern, insbesondere PET-Flaschen, mit einem Grundkörper und einer darauf abgeschiedenen Schutzschicht, wobei die Schutzschicht zumindest teilweise den Grundkörper bedeckt und aus einem in einem Laugenbad löslichen Material besteht, wobei die Schutzschicht während des Waschens in einem Laugenbad einer Behälterwaschmaschine nicht vor Durchlaufen von mindestens zehn Waschvorgängen, bevorzugt mindestens 15 Waschvorgängen, besonderes bevorzugt mindestens 20 Waschvorgängen, vollständig abgewaschen wird.

2. Verfahren zum Beschichten von Mehrweg-Kunststoffbehältern, insbesondere PET-Flaschen, mit einem Grundkörper und einer darauf abgeschiedenen Schutzschicht, wobei die Schutzschicht zumindest teilweise den Grundkörper bedeckt und aus einem in einem Laugenbad löslichen Material besteht, wobei ein Abscheiden der Schutzschicht auf der Innenfläche des Grundkörpers des Behälters mittels eines PECVD-Verfahrens zur mikrowelleninduzierten Plasmareaktion erfolgt,

   wobei als Prozessgas HMDSO, HMDSN oder HMDS oder einer Mischung aus mindestens zwei dieser Gase und als Trägergas Argon, Sauerstoff, Helium oder Stickstoff verwendet wird,
   wobei die Mikrowellenpulsleistung P_Puls in Abhängigkeit vom Duty-Cycle t_on / (t_on + t_off) gesteuert wird und die Beziehung für die mittlere Mikrowellenleistung P_mittel lautet:

$$P\_mittel = P\_Puls \times t\_on / (t\_on + t\_off)$$

   wobei t_on die Impulsdauer und t_off die Pausenzeit sind,
   wobei das Abscheiden einer weiteren Schutzschicht nicht vor Durchlaufen von mindestens zehn Waschvorgängen, bevorzugt mindestens 15 Waschvorgängen, besonderes bevorzugt mindestens 20 Waschvorgängen, erfolgt.

3.  Verfahren nach Anspruch 2, wobei P_mittel bei 10-250 W liegt, bevorzugt zwischen 10-100 W, P_Puls zwischen 200-2.000 W liegt, t_on zwischen 0,01-10 ms liegt, t_off zwischen 1-100 ms liegt, bevorzugte zwischen 1-50 ms.

4.  Verfahren nach Anspruch 2 oder 3, wobei der Anteil des Prozessgases an der Prozessgaszusammensetzung zwischen 20-100% beträgt, bevorzugt zwischen 20-50%, besonders bevorzugt zwischen 20-25%, und/oder der Gesamtfluss 50-1.500 sccm beträgt, bevorzugt zwischen 50-500 sccm, besonders bevorzugt 50-250 sccm.

5.  Verfahren nach einem der Ansprüche 2 bis 4, wobei vor dem Abscheiden der Schutzschicht eine Haftvermittlerschicht und eine Barriereschicht auf den Behälter abgeschieden werden.

6.  Verfahren nach einem der vorhergehenden Ansprüche, wobei die Schutzschicht aus HMDSO, HMDSN oder HMDS oder einer Mischung aus mindestens zwei dieser Stoffe gebildet ist.

7.  Verfahren nach einem der vorhergehenden Ansprüche, wobei die Schutzschicht eine Dicke von 10-200 nm, bevorzugt 80 nm, aufweist.

8.  Verfahren nach einem der vorhergehenden Ansprüche, wobei die Schutzschicht den gesamten Innenraum des Grundkörpers bedeckt, bevorzugt zusätzlich auch zumindest einen Teil der Außenfläche des Grundkörpers.

9.  Verfahren nach Anspruch 5 oder einem der Ansprüche 6 bis 8, soweit auf Anspruch 5 rückbezogen, wobei die Haftvermittlerschicht aus einem Gemisch von HMDSO und $O_2$ oder von HMDSO und Ar besteht, die eine Dicke von 5-40nm, bevorzugt 5-20 nm, aufweist, und die Barriereschicht aus einem Gemisch von HMDSN und $O_2$ oder von HMDSN und $O_2$ und Ar besteht, die eine Dicke von 5-20 nm, bevorzugt 10 nm, aufweist.

10.  Verfahren nach einem der Ansprüche 5 oder einem der Ansprüche 6 bis 9, soweit auf Anspruch 5 rückbezogen, wobei das für den Grundkörper verwendete PET-Material einen Anteil recycelten PET-Materials enthält, insbesondere einen Anteil größer 50%, besonders bevorzugt einen Anteil zwischen 80-100%, insbesondere 100%.

11.  Behälterbehandlungsmaschine für die Getränkeindustrie, insbesondere Reinigungsmaschine oder Beschichtungsmaschine, mit einem Mikroprozessor, einen programmierbaren Computer oder eine elektronische Schaltung, die eingerichtet und ausgebildet ist, einen Behälter mittels eines Verfahrens nach einem der Ansprüche 1 bis 10 zu behandeln.

## Claims

1.  A method for washing reusable plastic containers, in particular PET bottles, with a basic body and a protective layer deposited thereon, wherein the protective layer at least partially covers the basic body and is composed of a material that is soluble in a lye bath, wherein the protective layer is not entirely washed off during washing in a lye bath of a container-washing machine before undergoing at least ten washing cycles, preferably at least 15 washing cycles, particularly preferably at least 20 washing cycles.

2.  A method for coating reusable plastic containers, in particular PET bottles, with a basic body and a protective layer deposited thereon, wherein the protective layer at least partially covers the basic body and is composed of a material that is soluble in a lye bath, wherein a depositing of the protective layer on the inner surface of the basic body of the container occurs by means of a PECVD process for a microwave-induced plasma reaction,

    wherein HMDSO, HMDSN or HMDS or a mixture of at least two of these gases is used as the process gas and argon, oxygen, helium or nitrogen is used as the carrier gas,
    wherein the microwave pulse power P_pulse is controlled as a function of the duty cycle t_on / (t_on + t_off) and the relationship for the average microwave power P_average is:

$$P\_average = P\_pulse \times t\_on\ /\ (t\_on + t\_off)$$

    where t_on is the pulse width and t_off is the pause interval,
    wherein the deposition of a subsequent protective layer does not occur before the protective layer undergoes at least ten washing processes, preferably at least 15 washing processes, particularly preferably at least 20 washing processes.

3. A method according to claim 2, wherein P_average is 10-250 W, preferably 10-100 W, P_pulse is 200-2,000 W, t_on is 0.01-10 ms, and t_off is 1-100 ms, preferably 1-50 ms.

4. A method according to claim 2 or 3, wherein the proportion of process gas in the process gas composition lies between 20-100%, preferably between 20-50%, particularly preferably between 20-25%, and/or the total flow is 50-1,500 sccm, preferably 50-500 sccm, particularly preferably 50-250 sccm.

5. A method according to one of claims 2 to 4, wherein an adhesion promoter layer and a barrier layer are deposited on the container prior to the depositing of the protective layer.

6. A method according to one of the preceding claims, wherein the protective layer is composed of HMDSO, HMDSN or HMDS or a mixture of at least two of these substances.

7. A method according to one of the preceding claims, wherein the protective layer has a thickness of 10-200 nm, preferably 80 nm.

8. A method according to one of the preceding claims, wherein the protective layer covers the entire interior of the basic body, and preferably also at least part of the outer surface of the basic body.

9. A method according to claim 5 or one of claims 6 to 8 where dependent on claim 5, wherein the adhesion promoter layer is composed of a mixture of HMDSO and $O_2$ or HMDSO and Ar and has a thickness of 5-40 nm, preferably 5-20 nm, and the barrier layer is composed of a mixture of HMDSN and $O_2$ or of HMDSN and $O_2$ and Ar and has a thickness of 5-20 nm, preferably 10 nm.

10. A method according to claim 5 or one of claims 6 to 9 where dependent on claim 5, wherein the PET material used for the basic body contains a proportion of recycled PET material, in particular a proportion greater than 50%, particularly preferably a proportion between 80-100%, in particular 100%.

11. A container-treatment machine for the beverage industry, in particular a cleaning machine or coating machine, with a microprocessor, a programmable computer or an electronic circuit, which is designed and configured to treat a container using a method according to one of claims 1 to 10.

**Revendications**

1. Procédé de lavage de récipients réutilisables en matière plastique, notamment de bouteilles en PET, dotés d'un corps de base et d'une couche de protection déposée sur celui-ci, la couche de protection recouvrant partiellement au moins le corps de base et étant constituée d'un matériau soluble dans un bain alcalin, la couche de protection n'étant entièrement éliminée par le lavage dans un bain alcalin d'une machine à laver les récipients qu'après avoir subi au moins dix opérations de lavage, de préférence après au moins 15 opérations de lavage et de préférence particulière qu'après au moins 20 opérations de lavage.

2. Procédé de revêtement de récipients réutilisables en matière plastique, notamment de bouteilles en PET, dotés d'un corps de base et d'une couche de protection déposée sur celui-ci, la couche de protection recouvrant partiellement au moins le corps de base et étant constituée d'un matériau soluble dans un bain alcalin, le dépôt de la couche de protection sur la face intérieure du corps de base du récipient étant obtenu par un procédé PECVD pour une réaction plasma induite par micro-ondes,

le gaz de procédé utilisé étant l'HMDSO, l'HMDSN ou l'HMDS ou un mélange d'au moins deux de ces gaz, le gaz vecteur étant de l'argon, de l'oxygène, de l'hélium ou de l'azote,
la puissance P_Puls des impulsions micro-ondes étant commandée en fonction du rapport cyclique t_on / (t_on + t_off) et le rapport de puissance P_moy des micro-ondes étant :

$$P\_moy = P\_Puls \times t\_on / (t\_on + t\_off)$$

t_on et t_off étant respectivement la durée d'impulsion et le temps de pause,
le dépôt d'une autre couche de protection n'ayant pas lieu avant au moins dix opérations de lavage, de préférence pas avant au moins 15 opérations de lavage et de préférence particulière pas avant au moins 20 opérations de lavage.

3. Procédé selon la revendication 2, P_moy étant de 10 à 250 W et de préférence compris entre 10 et 100 W, P_Puls étant compris entre 200 et 2 000 W, t_on entre 0,01 et 10 ms, t_off entre 1 et 100 ms et de préférence entre 1 et 50 ms.

4. Procédé selon la revendication 2 ou 3, la fraction de gaz de procédé dans la composition de gaz de procédé étant comprise entre 20 et 100 %, de préférence entre 20 et 50 % et de préférence particulière entre 20 et 25 %, et/ou le débit total étant de 50 à 1 500 sccm, de préférence compris entre 50 et 500 sccm et de préférence particulière entre 50 et 250 sccm.

5. Procédé selon l'une des revendications 2 à 4, une couche de promoteur d'adhérence et une couche barrière étant déposées sur le récipient avant le dépôt de la couche de protection.

6. Procédé selon l'une des revendications précédentes, la couche de protection est formé à partir d'HMDSO, d'HMDSN ou d'HMDS ou d'un mélange d'au moins deux de ces substances.

7. Procédé selon l'une des revendications précédentes, la couche de protection ayant une épaisseur de 10 à 200 nm et de préférence de 80 nm.

8. Procédé selon l'une des revendications précédentes, la couche de protection recouvrant la totalité de l'espace intérieur du corps de base et de préférence en outre également une partie au moins de la surface extérieure du corps de base.

9. Procédé selon la revendication 5 ou selon l'une des revendications 6 à 8 dans la mesure où ces dernières se réfèrent à la revendication 5, la couche de promoteur d'adhérence étant constituée d'un mélange d'HMDSO et d'$O_2$ ou d'HMDSO et d'Ar et a une épaisseur de 5 à 40 nm, de préférence de 5 à 20 nm, et la couche barrière étant constituée d'un mélange d'HMDSN et d'$O_2$ ou d'HMDSN, d'$O_2$ et d'Ar et a une épaisseur de 5 à 20 nm et de préférence de 10 nm.

10. Procédé selon la revendication 5 ou selon l'une des revendications 6 à 9 dans la mesure où ces dernières se réfèrent à la revendication 5, le PET utilisé pour le corps de base contenant une part de PET recyclé, notamment une proportion supérieure à 50 % et de préférence particulière comprise entre 80 et 100 %, notamment de 100 %.

11. Machine de traitement de récipients pour l'industrie des boissons, notamment une machine de nettoyage ou une machine de revêtement, dotée d'un microprocesseur, d'un ordinateur programmable ou d'un circuit électronique et conçue et équipée pour traiter un récipient par un procédé selon l'une des revendications 1 à 10.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3144457 A1
- WO 2017102280 A2
- DE 102011104730 A1
- DE 102016105548 A1
- DE 102018114776 A1
- DE 102018129694 A1
- WO 9522413 A1
- WO 9917334 A1